# EUROPEAN PATENT APPLICATION

(11) **EP 4 529 094 A1**
(43) Date of publication of application: **26.03.2025**
(21) Application number: 23210846.4
(22) Date of filing: 20.11.2023
(51) Int. Cl.: H04L 12/10

(54) **UNIDIRECTIONAL USB-C TO POWER OVER ETHERNET CONVERTER FOR POWER WITH BIDIRECTIONAL DATA**

(30) Priority: 21.09.2023 US 202318471543
(71) Applicant: Phihong Technology Co., Ltd., Taoyuan City 33383 (TW)
(72) Inventor: Frosch, Richard, Bohemia, 11716 (US); DaSilva, Joseph, Bohemia, 11716 (US); Gong, Zhenya, Bohemia, 11716 (US)
(74) Representative: Zaboliene, Reda

(57) **Abstract**

A unidirectional USB-C to PoE converter for power with bidirectional data, which includes a USB-C interface to receive and transmit USB-C power and USB-C data, a PoE interface to receive and transmit PoE power and Ethernet data, an USB/Ethernet data converter configured to transpose the USB-C data from the USB-C interface to the PoE interface and vice versa by determining communication protocol therein between and processing incoming USB-C data signals into Ethernet data formats and vice versa, a USB-C PD controller configured to control the USB-C power to charge a device connected to the PoE interface, a power converter used to boost up USB-C voltage of the USB-C power to fit PoE voltage, and a PoE interface controller configured to receive and deliver the USB-C voltage been boosted to the PoE interface.

## Description

### TECHNICAL FIELD

The present invention relates to the technology field of Universal Serial Bus type C (USB-C) to power over ethernet (PoE) converter, and more particularly, a unidirectional USB-C to PoE converter for power with bidirectional data.

### BACKGROUND

With more and more home terminal, monitoring equipment and enterprise network communication products are successively choosing to obtain system power supply through network cables, thus avoiding the inconvenience caused by using AC adapters, and will further expand the applications of Ethernet technology. Products for such power supply and receiving power are called PoE equipment, namely power over Ethernet. PoE technology can pass electrical power safely along with data on Ethernet cables or lines.

USB standard technology was developed as a bus to connect between computers and electronic devices. USB connection was designed to provide both communication and power. Since its introduction, USB has been developed to replace a variety of computer interfaces, such as serial and parallel ports. USB has also evolved to function as a separate power charger for portable devices. Newly developed USB-C connectors offer fast data rates and fast power delivery.

With increased usage and development of PoE and USB-C devices that provide power over different cabling, the need for a device to transfer power and data back and forth over these two cable mediums will be needed. While there are numerous devices to transpose just data between the two mediums, there are limited solutions to pass power from PoE to USB-C and no devices to pass power from USB-C to PoE.

Our proposed solution is unidirectional power and bidirectional data between the two cable mediums. The ability to extend USB-C power up to 100 m via PoE would enable new methods to connect PoE ready devices.

### SUMMARY OF THE INVENTION

In one aspect of the present invention, a unidirectional USB-C to power over Ethernet (PoE) converter for power with bidirectional data is provided. This converter facilitates the transfer of both power and data and consists of the following components:
1. USB-C interface: This interface manages the reception and transmission of USB-C signals, containing USB-C power and USB-C data.
2. PoE interface: This interface is responsible for receiving and transmitting PoE signals, which contain PoE power and Ethernet data.
3. Ethernet/USB Data Converter: Positioned between the USB-C interface and the PoE interface, this converter transposes the USB-C data from the USB-C interface to the PoE interface, and vice versa. It accomplishes this by determining the communication protocol between the two interfaces and processing incoming USB-C signals into PoE data formats and vice versa.
4. Power Converter: Connected between the USB-C interface and the PoE interface, this power converter converts the USB-C voltage to match the PoE voltage.
5. USB-C power delivery (PD) controller: This controller is connected between the USB-C interface and the power converter. Its primary role is to manage the conversion of the USB-C power signal from a USB-C source into a power delivery signal for the PoE interface.

In one preferred embodiment, the unidirectional USB-C to power over Ethernet (PoE) converter further includes a supervisory microcontroller unit to control components activated depending on direction of power flow.

In one preferred embodiment, the unidirectional USB-C to power over Ethernet (PoE) converter further includes a power and data splitter/combiner disposed between the USB/Ethernet data converter and the PoE interface to act as a power and data combiner.

In one preferred embodiment, the PoE interface controller disposed between the power and data splitter/combiner and the power converter, configured to negotiate with a PoE switch or a midspan to ensure the powering solution is IEEE 802.3 POE standards compliant and can incorporate all of the functions for a PoE system including detection, classification and inrush current limiting.

In one preferred embodiment, the PoE interface controller is a microcontroller unit (MCU).

In one preferred embodiment, the USB/Ethernet data converter is a data conversion chipset.

In one preferred embodiment, the power converter includes flyback converter, half bridge converter, full bridge converter, boost converter, or LLC converter.

In one preferred embodiment, the USB-C power delivery (PD) controller is a microcontroller unit (MCU).

According to another aspect of the present invention, a unidirectional USB-C to power over Ethernet (PoE) converter for power with bidirectional data is proposed, which includes a USB-C interface to receive and transmit USB-C signals containing USB-C power and USB-C data, a PoE interface to receive and transmit PoE signals containing PoE power and Ethernet data, an USB/Ethernet data converter coupled between USB-C interface and the PoE interface, configured to transpose the USB-C data from the USB-C interface to the PoE interface and vice versa by determining communication protocol between the USB-C interface and the PoE interface and processing incoming USB-C data signals into Ethernet data formats and vice versa, a power converter coupled between the USB-C interface and the PoE interface, used to convert USB-C voltage of the USB-C power to fit PoE voltage, a power and data splitter/combiner disposed between the USB/Ethernet data converter and the PoE interface, configured to act as a power and data combiner, a USB-C power delivery controller connected between the power converter and the USB-C interface, configured to control the USB-C power to charge a device connected to the PoE interface, and a PoE interface controller coupled between the power converter and the power and data splitter/combiner, configured to receive and deliver the USB-C voltage been boosted to the PoE interface.

In one preferred embodiment, the unidirectional USB-C to power over Ethernet (PoE) converter further includes a supervisory microcontroller unit to control components activated depending on direction of power flow.

In one preferred embodiment, the PoE interface controller disposed between the power converter and the power and data splitter/combiner, configured to negotiate with a PoE switch or a midspan to ensure the powering solution is IEEE 802.3 POE standards compliant and can incorporate all of the functions for a PoE system including detection, classification and inrush current limiting.

In one preferred embodiment, the PoE interface controller is a microcontroller unit (MCU).

In one preferred embodiment, the Ethernet/USB data converter controls data transfer up to 10 Gb/s.

In one preferred embodiment, the USB/Ethernet data converter is a data conversion chipset.

In one preferred embodiment, the USB-C power delivery controller is a microcontroller unit.

In one preferred embodiment, the power converter includes flyback converter, half bridge converter, full bridge converter, boost converter, or LLC converter.

### BRIEF DESCRIPTION OF THE DRAWINGS

The components, characteristics and advantages of the present invention may be understood by the detailed descriptions of the preferred embodiments outlined in the specification and the drawings attached:
FIG. 1 shows a schematic drawing of the unidirectional USB-C to PoE converter according to one preferred embodiment of the present invention.
FIG. 2 shows a schematic block diagram of the unidirectional USB-C to PoE to converter circuit according to one preferred embodiment of the present invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

In the present invention, a unidirectional USB-C to PoE converter for power with bidirectional data is proposed to convert USB-C data to Ethernet data and vice versa except to add power from USB-C to PoE using a unidirectional converter.

The unidirectional converter is constructed by using a boost topology or similar DC-DC converter for power conversion, this product will boost the USB-C voltage up to the PoE voltage. Other required components may include a data conversion chipset to transpose the data from USB to Ethernet and vice versa, a microcontroller unit (MCU) will be used for the PoE interface and a USB-C power delivery (PD) controller will be used for the USB-C interface, and a supervisory MCU may need to be used to control components activated depending on direction of power flow.

In other alternatives, the power converter can be any topology that converts power from one form to another to provide boost up USB-C voltage to PoE levels, such as flyback converter, half bridge converter, full bridge converter, boost converter, LLC converter or the like.

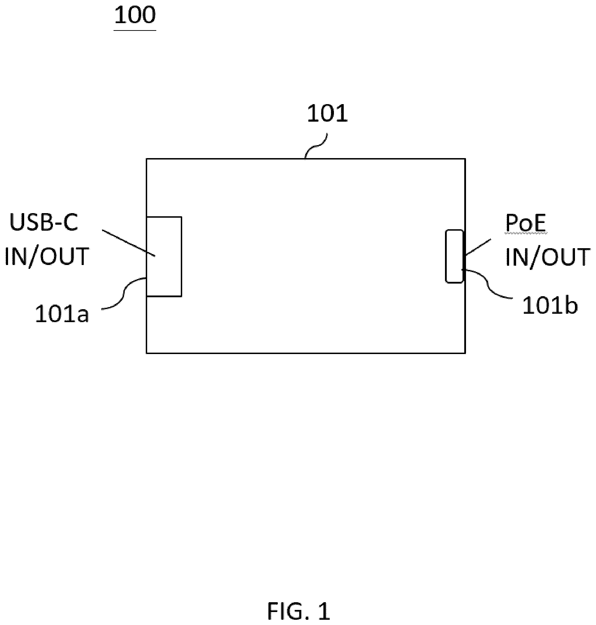

FIG. 1 illustrates a schematic drawing of the unidirectional USB-C to PoE converter 100 for passing power from USB-C port to PoE port and transporting data from USB-C port to PoE port and vice versa. As shown in FIG. 1, in one embodiment, the unidirectional USB-C to PoE converter 100 may be an apparatus include a case 101, the case 101 may at least include a USB-C port 101a and a PoE port 101b for receiving plugs from different devices, i.e., the USB-C port 101a is configured to receive a USB-C plug from a USB-C cable, while the PoE port 101b is configured to receive a PoE connector plug. The case 101 also includes hidden internal electronic components that can be assembled onto a PCB board and be configured to electrically connect the USB-C port 101a to the PoE port 101b.

In one preferred embodiment of the present invention, the PoE port can be Ethernet RJ45 port to achieve DC power and data power transmission for powered device.

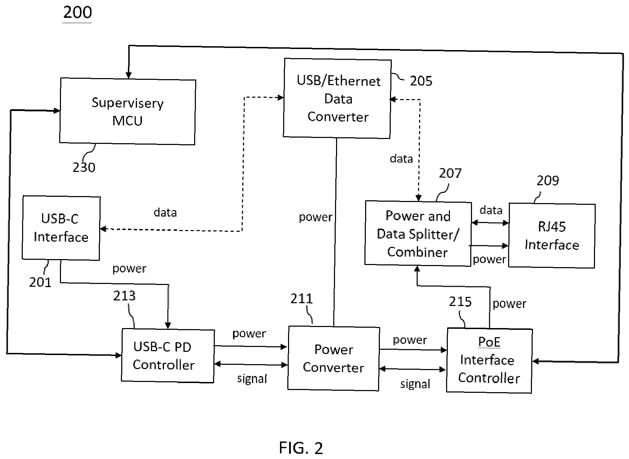

Please refer to FIG. 2, it illustrates a schematic block diagram of the unidirectional USB-C to PoE converter circuit 200 according to an exemplary embodiment. Firstly, the power and data flows from USB-C to PoE will be explained. Typical USB-C signals containing power and data are supplied to the unidirectional USB-C to PoE converter circuit 200 from the USB-C interface 201 through the USB-C PD controller 213. The combined data and power delivered from the USB-C interface 201 are separated. The data path in circuit 200 may transmit along the USB-C interface 201 to the USB/Ethernet data converter 205, to the power and data splitter/combiner 207 and out PoE interface 209 (RJ45 interface) to the connected PoE device.

In some embodiments, the USB/Ethernet data converter 205 may include a data conversion chipset to transpose the data from USB to Ethernet and vice versa, which determines the communication protocols between the USB-C interface 201 and the PoE interface 209 (RJ45 interface). Once the protocol is determined, the USB/Ethernet data converter 205 processing incoming USB-C data signals into Ethernet data formats and vice versa. The output of the USB/Ethernet data converter 205 may be coupled to the PoE interface 209 (RJ45 interface) through the power and data splitter/combiner 207. The USB/Ethernet data converter 205 may control data transfer up to 10 Gb/s. In some embodiments, a power converter 211 may connect to the USB/Ethernet data converter. The Ethernet/data converter 205 may communicate to the PoE device coupled to the PoE interface 209.

The power path in circuit 200 generally converts USB-C input signals into power signals depending on the originating source device. Along the power path, in between the USB-C interface 201 and PoE interface 209, the circuit may include a USB-C PD controller 213, the power converter 211, the power and data splitter/combiner 207, and a PoE interface controller 215.

In some embodiments, the USB-C PD controller 213 is a microcontroller unit (MCU).

In some embodiments, the PoE interface controller 215, which may be a PoE interface MCU, that may negotiate with PoE switch or a midspan to ensure the powering solution is IEEE 802.3 POE standards compliant, which may include IEEE 803.3af/at (15.4 /30 Watts) and IEEE802.3bt (60-90 Watts) and next generation IEEE 802.3 POE (>100 Watts) compliant and can incorporate all of the functions for a PoE system including detection, classification and inrush current limiting.

In some embodiments, the USB-C voltage received from the USB-C interface 201 through the USB-C PD controller 213 will be boosted by the power converter 211 and delivers an increased voltage to the PoE interface controller 215 to fit the PoE voltage levels. The PoE interface controller 215 outputs a PoE voltage to the PoE interface 209 through the power and data splitter/combiner 207.

In some embodiments, the power and data splitter/combiner 207 is acted as a power and data combiner to combine the data transfer from output of the USB/Ethernet data converter 205 and output PoE voltage from the PoE interface controller 215, i.e., a converted power signal from the USB-C source.

In some embodiments, the PoE interface 209 is configurable to provide the USB-C signals converted into the Ethernet formats as readable data and charging power to the PoE device.

In some embodiments, the USB-C PD controller 213 is configured to provide power to charge a device connected to the PoE interface 209.

In some embodiments, a supervisory MCU 230 may need to be used to control components activated depending on direction of power flow.

It should also be emphasized that the USB-C PD control processes executed by the USB-C PD controller 213 will incorporate both USB sink and source functions. This proper operation of either sink or source function will be determined by the supervisory MCU 230.

In addition, the separated power and data path that is depicted in both FIG. 2 is only for illustrating the power delivery path from the PoE interface (RJ45 interface) to the USB-C interface or vice versa. Skilled persons in this technical field should understand that both data and power is transferred in a single Ethernet RJ45 cable.

While various embodiments of the present invention have been described above, it should be understood that they have been presented by a way of example and not limitation. Numerous modifications and variations within the scope of the invention are possible. The present invention should only be defined in accordance with the following claims and their equivalents.

## Claims

1. A unidirectional USB-C to power over Ethernet, PoE, converter (100) for power with bidirectional data, **characterized by** comprising:
a USB-C interface (201) to receive and transmit USB-C signals containing USB-C power and USB-C data;
a PoE interface (209) to receive and transmit PoE signals containing PoE power and Ethernet data;
an USB/Ethernet data converter (205) coupled between said USB-C interface (201) and said PoE interface (209), configured to transpose said USB-C data from said USB-C interface (201) to said PoE interface (209) and vice versa by determining communication protocol between said USB interface (201) and said PoE interface (209) and processing incoming USB-C data signals into Ethernet data formats and vice versa;
a USB-C power delivery controller (213) connected between a power converter (211) and said USB-C interface (201), configured to control said USB-C power to charge a device connected to said PoE interface (209), wherein said power converter (211) coupled between said PoE interface (209) and said USB-C interface (201) is used to boost up USB-C voltage of said USB-C power to fit PoE voltage; and
a PoE interface controller (215) coupled between said power converter (211) and said PoE interface (209), configured to receive and deliver said USB-C voltage been boosted to said PoE interface (209).

2. The unidirectional USB-C to power over Ethernet, PoE, converter (100) of claim 1, further **characterized by** including a supervisory microcontroller unit (230) to control components activated depending on direction of power flow.

3. The unidirectional USB-C to power over Ethernet, PoE, converter of claim 1, further **characterized by** including a power and data splitter/combiner (207) disposed between said USB/Ethernet data converter (205) and said PoE interface (209) to act as a power and data combiner.

4. The unidirectional USB-C to power over Ethernet, PoE, converter (100) of claim 1, **characterized in that** said PoE interface controller (215) disposed between said power converter (211) and said power and data splitter/combiner (207), configured to negotiate with a PoE switch or a midspan to ensure the powering solution is IEEE 802.3 POE standards compliant and can incorporate all of the functions for a PoE system including detection, classification and inrush current limiting.

5. The unidirectional USB-C to power over Ethernet, PoE, converter (100) of claim 4, **characterized in that** said PoE interface controller (215) is a microcontroller unit, MCU.

6. The unidirectional USB-C to power over Ethernet, PoE, converter (100) of claim 4, **characterized in that** said power converter (211) includes flyback converter, half bridge converter, full bridge converter, boost converter, or LLC converter.

7. The unidirectional USB-C to power over Ethernet, PoE, converter (100) of claim 1, **characterized in that** said USB/Ethernet data converter (205) is a data conversion chipset.

8. The unidirectional USB-C to power over Ethernet, PoE, converter (100) of claim 1, **characterized in that** said USB-C power delivery, PD, controller (213) is a microcontroller unit.

9. A unidirectional USB-C to power over Ethernet, PoE, converter (100) for power with bidirectional data, **characterized by** comprising:
a USB-C interface (201) to receive and transmit USB-C signals containing USB-C power and USB-C data;
a PoE interface (209) to receive and transmit PoE signals containing PoE power and Ethernet data;
an USB/Ethernet data converter (205) coupled between USB-C interface (201) and said PoE interface (209), configured to transpose said USB-C data from said USB-C interface (201) to said PoE interface (209) and vice versa by determining communication protocol between said USB-C interface (201) and said PoE interface (209) and processing incoming USB-C data signals into Ethernet data formats and vice versa;
a power converter (211) coupled between said USB-C interface (201) and said PoE interface (209), used to boost up USB-C voltage of said USB-C power to fit PoE voltage;
a power and data splitter/combiner (207) disposed between said USB/Ethernet data converter (205) and said PoE interface (209), configured to act as a power and data combiner;
a USB-C power delivery controller (213) connected between said power converter (211) and said USB-C interface (201), configured to control said USB-C power to charge a device connected to said PoE interface (209); and
a PoE interface controller (215) coupled between said power converter (211) and said PoE interface (209), configured to receive and deliver said USB-C voltage been boosted to said PoE interface (209).

10. The unidirectional USB-C to power over Ethernet, PoE, converter (100) of claim 9, further **characterized by** including a supervisory microcontroller unit (230) to control components activated depending on direction of power flow.

11. The unidirectional USB-C to power over Ethernet, PoE, converter of claim 9, **characterized in that** said PoE interface controller (215) disposed between said power converter (211) and said power and data splitter/combiner (207), configured to negotiate with a PoE switch or a midspan to ensure the powering solution is IEEE 802.3 POE standards compliant and can incorporate all of the functions for a PoE system including detection, classification and inrush current limiting.

12. The unidirectional USB-C to power over Ethernet, PoE, converter (100) of claim 11, **characterized in that** said PoE interface controller (215) is a microcontroller unit, MCU.

13. The unidirectional USB-C to power over Ethernet, PoE, converter (100) of claim 9, **characterized in that** said Ethernet/USB data converter (205) controls data transfer up to 10 Gb/s.

14. The unidirectional USB-C to power over Ethernet, PoE, converter (100) of claim 9, **characterized in that** said USB/Ethernet data converter (205) is a data conversion chipset, said USB-C power delivery controller (213) is a microcontroller unit.

15. The unidirectional USB-C to power over Ethernet, PoE, converter (100) of claim 9, **characterized in that** said power converter (211) includes flyback converter, half bridge converter, full bridge converter, boost converter, or LLC converter.

## Amended claims

### Amended claims in accordance with Rule 137(2) EPC.

1. A unidirectional USB-C to power over Ethernet, PoE, converter (100) for power with bidirectional data, comprising:
a USB-C interface (201) to receive and transmit USB-C signals containing USB-C power and USB-C data;
a PoE interface (209) to receive and transmit PoE signals containing PoE power and Ethernet data;
an USB/Ethernet data converter (205) coupled between said USB-C interface (201) and said PoE interface (209), configured to transpose said USB-C data from said USB-C interface (201) to said PoE interface (209) and vice versa by determining communication protocol between said USB-C interface (201) and said PoE interface (209) and processing incoming USB-C data signals into Ethernet data formats and vice versa;
a USB-C power delivery controller (213) connected between a power converter (211) and said USB-C interface (201), configured to control said USB-C power to charge a device connected to said PoE interface (209), wherein said power converter (211) coupled between said PoE interface (209) and said USB-C interface (201) is used to boost up USB-C voltage of said USB-C power to fit PoE voltage;
a power and data splitter/combiner disposed between said USB/Ethernet data converter (205) and said PoE interface (209), configured to act as a power and data combiner;
a PoE interface controller (215) coupled between said power converter (211) and said PoE interface (209), configured to ensure that the powering solution is IEEE 802.3 POE standards compliant and can incorporate all of the functions for a PoE system including detection, classification and inrush current limiting and to receive and deliver said USB-C voltage been boosted to said PoE interface (209);
**characterized by** comprising:
a supervisory microcontroller unit (230) disposed between said USB-C controller (213) and said PoE interface controller (215); wherein USB-C power delivery processes executed by said USB-C power delivery controller (213) incorporates both sink and source functions and operation of either said sink function or said source function is determined by said supervisory microcontroller unit (230);
wherein said USB/Ethernet data converter (205) is a data conversion chipset.

2. The unidirectional USB-C to power over Ethernet, PoE, converter (100) of claim 1, **characterized in that** said PoE interface controller (215) is a microcontroller unit, MCU.

3. The unidirectional USB-C to power over Ethernet, PoE, converter (100) of claim 1, **characterized in that** said power converter (211) includes flyback converter, half bridge converter, full bridge converter, boost converter, or LLC converter.

4. The unidirectional USB-C to power over Ethernet, PoE, converter (100) of claim 1, **characterized in that** said USB-C power delivery, PD, controller (213) is a microcontroller unit.

5. The unidirectional USB-C to power over Ethernet, PoE, converter (100) of claim 1, **characterized in that** said USB/Ethernet data converter (205) is configured to control data transfer up to 10 Gb/s.
